(19) Europäisches Patentamt / European Patent Office / Office européen des brevets

(11) **EP 4 276 708 B1**

(12) **EUROPEAN PATENT SPECIFICATION**

(45) Date of publication and mention
of the grant of the patent:
**10.12.2025 Bulletin 2025/50**

(21) Application number: **22173333.0**

(22) Date of filing: **13.05.2022**

(51) International Patent Classification (IPC):
**G06N 20/00** *(2019.01)* **G06N 3/006** *(2023.01)*
**G05D 1/00** *(2024.01)* *G06N 7/00* *(2023.01)*

(52) Cooperative Patent Classification (CPC):
**G06N 20/00; G05D 1/0221; G06N 3/006;**
G06N 7/01

(54) **APPARATUS AND COMPUTER-IMPLEMENTED METHOD FOR PROVIDING A TRAINED POLICY CONFIGURED TO CONTROL A DEVICE, APPARATUS AND METHOD FOR CONTROLLING A DEVICE, AND VEHICLE**

GERÄT UND COMPUTERIMPLEMENTIERTES VERFAHREN ZUM BEREITSTELLEN EINER TRAINIERTEN RICHTLINIE, DIE ZUM STEUERN EINER VORRICHTUNG KONFIGURIERT IST, GERÄT UND VERFAHREN ZUM STEUERN EINER VORRICHTUNG UND FAHRZEUG

APPAREIL ET PROCÉDÉ MIS EN ŒUVRE PAR ORDINATEUR POUR FOURNIR UNE POLITIQUE FORMÉE CONÇUE POUR COMMANDER UN DISPOSITIF, APPAREIL ET PROCÉDÉ POUR COMMANDER UN DISPOSITIF, ET VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.11.2023 Bulletin 2023/46**

(73) Proprietor: **Robert Bosch GmbH**
**70442 Stuttgart (DE)**

(72) Inventors:
 • **Ross, Chana**
   **3095333 Zichron Yaakov (IL)**
 • **Di Castro, Dotan**
   **3440619 Haifa (IL)**
 • **Miron, Yakov**
   **3467929 Yakov (IL)**
 • **Tessler, Chen**
   **3508409 Haifa (IL)**

(56) References cited:
   **US-A1- 2019 126 472**

 • **ROSS CHANA ET AL: "AGPNet - Autonomous Grading Policy Network", 20 December 2021 (2021-12-20), pages 1 - 7, XP055982493, Retrieved from the Internet <URL:https://arxiv.org/pdf/2112.10877.pdf> [retrieved on 20221117], DOI: 10.22260/ICRA2022/0013**
 • **YUNPENG PAN ET AL: "Agile Off-Road Autonomous Driving Using End-to-End Deep Imitation Learning", ARXIV.ORG, CORNELL UNIVERSITY LIBRARY, 201 OLIN LIBRARY CORNELL UNIVERSITY ITHACA, NY 14853, 21 September 2017 (2017-09-21), XP081323203**

**Description**

Background art

The invention relates to an apparatus or a method in accordance with the independent claims. A computer program is also subject of the present invention.

Algorithms for machine learning (ML) for sequential decision making problems can be roughly split into two categories - reinforcement learning (RL) and imitation learning (IL). While reinforcement learning aims to maximize a given reward function by observing the outcome of actions performed against the environment, the goal of imitation learning is to learn an algorithmic agent that imitates an expert. Imitation learning is useful for many real world tasks, especially when designing a reward function is hard, e.g., autonomous driving, medical care, and more. Previous work in imitation learning either assumed a fully interactive expert demonstrator or zero access to an expert.

ROSS CHANA ET AL: "AGPNet - Autonomous Grading Policy Network", [Online] 20 December 2021 (2021-12-20), pages 1-7, DOI: 10.22260/ICRA2022/0013 establish heuristics and learning strategies for the autonomous control of a dozer grading an uneven area studded with sand piles.

YUNPENG PAN ET AL: "Agile Off-Road Autonomous Driving Using End-to-End Deep Imitation Learning", ARXIV.ORG, CORNELL UNIVERSITY LIBRARY, 201 OLIN LIBRARY CORNELL UNIVERSITY ITHACA, NY 14853, 21 September 2017 (2017-09-21), present an end-to-end imitation learning system for agile, off-road autonomous driving using only low-cost on-board sensors. By imitating a model predictive controller equipped with advanced sensors, the authors train a deep neural network control policy to map raw, high-dimensional observations to continuous steering and throttle commands.

US 2019/126472 A1 discloses a neural network control system for controlling an agent to perform a task in a real-world environment, operates based on both image data and proprioceptive data describing the configuration of the agent.

Summary of the invention

Against this background, the approach presented here provides a method, an apparatus using this method, and a corresponding computer program, in accordance with the main claims. Advantageous embodiments and improvements of the subject matter defined in the independent claim are possible by means of the features indicated in the dependent claims.

According to embodiments, for example, there may be provided an algorithmic approach for active realistic imitation learning, wherein an expert-agent feedback loop may be created, wherein an agent may request demonstrations from an expert and the expert can provide them. According to embodiments, for example, there may be provided a realistic algorithmic approach for a machine learning agent to request entire demonstrations instead of single-step annotations. For example, embodiments may be applicable to solving tasks autonomously or at least partially so, such as to any off-road autonomous dozer application or the like to learn trajectory planning from demonstrations. Furthermore, for example, such an algorithmic approach may be applicable to any application that uses RL or ML to train models and can be used jointly with existing algorithms for ML training for improved data complexity.

In contrast to previous approaches in imitation learning, which either assumed a fully interactive expert demonstrator or zero access to an expert, embodiments may bridge the gap between these two extreme approaches. On the one hand, a realistic way of collecting demonstrations can be provided, for example. The expert does not have to provide fine-grained information, but may rather initialize it at a certain state and collect an entire trajectory starting from there. Converting the demonstration to trainable data may be oblivious to the expert, for instance, a human driver may demonstrate by driving the vehicle, whereas behind the scenes a data collection algorithm may record the exact angle of a steering wheel and the amount of torque applied by an engine. Not only may embodiments provide a realistic way to train an imitation learning algorithm, but in the theoretical sense, like a fully interactive algorithm, the behaviour according to embodiments may converge in the expert policy over time, for example.

What is presented is a computer-implemented method for providing a trained policy configured to control a device, wherein the device (100) is a physical off-road vehicle, wherein the device (100) is configured to solve a task in a working environment by controlling the device (100) using at least one actuator (102) for performing actions of the device (100), wherein the task to be solved comprises interaction of the off-road vehicle with granular material in the working environment, wherein the task to be solved comprises trajectory planning from an initial state to a final state from demonstration datasets (122), wherein each demonstration dataset (122) represents an expert policy including all actions taken by the expert for solving the task starting from an initial state to a final state in which the task is completed wherein the method (200) comprises the steps of: initialising (210) a given policy (112) including a series of actions for solving the task and a dataset (114) representing the task to be solved and including initial states for solving the task; executing (220) an algorithm (125) for an active imitation learning agent using the given policy (112) and the dataset (114), wherein the algorithm (125) comprises solving the task using the given policy (112) starting from each of the initial states, by selecting initial states from which the agent is least certain depending on a likelihood of the task being solved differently by the agent and by an expert both starting from the same initial state, wherein the likelihood is determined depending on a level of uncertainty of the agent with respect to solving the task in the same way as the expert, and appending a demonstration dataset (122) for each selected initial state to the dataset (114) to produce an extended dataset (124), and training (230) the given policy (112) on the extended dataset (124), in order to provide the trained policy (132).

The device may be configured to solve the task in an at least partially autonomous manner. The device is a physical off-road vehicle. A policy may include a series of actions, a trajectory and/or the like. The expert may be a human or an algorithm. The expert may be arranged inside or outside the device. The likelihood of the task being solved differently by the agent and by the expert both starting from the same initial state may represent a level of uncertainty of the agent with respect to solving the task in the same way as the expert. When selecting initial states, preference may be given to initial states associated with a high likelihood or a high level of uncertainty. Any initial state may be selected if the likelihood is above a predetermined threshold value. The demonstration dataset may represent an expert policy for solving the task.

According to an embodiment, in the step of executing, the algorithm may be executed in an iterative manner. The iterative algorithm may go back and forth between solving, selecting and appending. Iterations of the algorithm may be performed until stopping conditions are met. Stopping conditions may include a predetermined number of initial states falling below a predetermined threshold likelihood. Such an embodiment offers the advantage that the imitation learning process may gradually and reliably converge on the expert behaviour.

According to the invention, in the step of executing, each demonstration dataset may represent all actions taken by the expert to solve the task from the selected initial state to a final state in which the task is completed. Such an embodiment offers the advantage that a number of queries of demonstration datasets can be kept low. Moreover, entire courses of actions from initial state to final state are better suited to demonstrate solving complex tasks than obtaining individual demonstrations for each state.

What is also presented here is a method for controlling a device, wherein the device (100) is a physical off-road vehicle, wherein the device (100) is configured to solve a task in a working environment by controlling the device (100) using at least one actuator (102) for performing actions of the device (100), wherein the task to be solved comprises interaction of the off-road vehicle with granular material in the working environment wherein the method (300) comprises the steps of: providing (335) a trained policy (132) by performing method (200) according to one of the preceding claims; determining (340) a control signal (145) using the trained policy (132); and outputting (350) the control signal (145) to the at least one actuator (102) of the device (100), in order to control the device (100).

The trained policy, and thus the control signal, may result in the device behaving in a way suitable to solve the task.

According to the invention presented herein, the device is a physical off-road vehicle, wherein the task to be solved comprises interaction of the off-road vehicle with granular material in the working environment. The off-road vehicle can be a dozer, bulldozer, compactor, dumper, earthmover, construction vehicle, heavy machinery, heavy-duty vehicle or any other type of vehicle which has a number of assignments that include interaction with the environment, more specifically the granular material. Examples for these type of assignments or actions can be grading, dumping granular material, compacting an area, removing granular material etc. The granular material may include soil, sand, snow, rubble, rock and/or similar particulate material. The policy may include at least one trajectory planned for the vehicle to follow.

Any method presented here may be implemented, for example, in software or hardware or in a mixture of software and hardware, for example in an apparatus or a controller.

The approach presented here also provides an apparatus configured to execute, control or implement by corresponding means the steps of a variant of a method presented here. The object underlying the invention can be achieved quickly and efficiently also by means of this embodiment of the invention in form of an apparatus.

To this end, the apparatus may comprise at least one computation unit for processing signals or data, at least one storage unit for storing signals or data, at least one interface to a sensor or an actuator reading sensor signals from the sensor or outputting data or control signals to the actuator, and/or at least a communication interface for reading or outputting data embedded in a communication protocol. For example, the computation unit may be a signal processor, a microcontroller or the like, wherein the storage unit may be flash storage an EEPROM or a magnetic storage unit. The communication interface may be configured to read or output data in a wireless and/or wired manner, wherein a communication interface capable of reading or outputting wired data may read data electrically or optically from a corresponding data transmission line or output the same to a corresponding data transmission line, for example. An apparatus may be understood as an electric device processing sensor signals and outputting control and/or data signals depending thereon. The apparatus may comprise an interface realised in hardware and/or in software. If realised in hardware, the interfaces may be part of a so-called system ASIC including various functions of the apparatus, for example. However, the interfaces may also be distinct integrated circuits or at least partially consist of discrete components. If realised in software, the interfaces may be software modules, for example realised on a microcontroller along with other software modules.

The approach presented here also provides a vehicle, wherein the vehicle comprises the apparatus presented herein.

The vehicle also comprises at least one actuator. The actuator may be configured to move at least one component of the vehicle in order to influence the vehicle's behaviour. The apparatus and the at least one actuator may be connected to each other for signal communication or data communication.

According to the invention, the vehicle is an off-road vehicle, wherein the task may comprise interaction of the off-road vehicle with granular material in the working environment. The vehicle or off-road vehicle can be a dozer, bulldozer, compactor, dumper, earthmover, construction vehicle, heavy machinery, heavy-duty vehicle or any other type of vehicle which has a number of assignments that include interaction with the environment, more specifically the granular material. Examples for these type of assignments or actions can be grading, dumping granular material, compacting an area, removing granular material etc. The granular material may include soil, sand, snow, rubble, rock and/or similar particulate material. The policy may include at least one trajectory planned for the vehicle to follow.

What is also advantageous is a computer program product or computer program with program code which may be stored on a machine-readable carrier or storage medium, such as semiconductor storage, hard-disk storage or optical storage, and is used for executing, implementing and/or controlling the steps of the method according to one of the previously described embodiments, particularly when the program product or program is executed on a computer or an apparatus.

An embodiment may be used as an upstream part in a machine-learning tool chain. The method for providing a trained policy configured to control a device may represent a core machine learning algorithm that can be used to improve data quality for learning. It may serve as a method for training a machine learning system that can be used for applications mentioned following. After being trained in this way, a machine-learning system can then be put to downstream use as outlined in the following. In other words, it can be used to train algorithmic agents to operate similarly to humans in solving or performing tasks such as, but not limited to, autonomous driving, robotics, control, and more. Thus, a control signal for controlling a physical system, like an off-road vehicle, a computer-controlled machine, like a robot, a vehicle or any other device, can be computed or generated.

Embodiments of the approach presented here are illustrated in the drawings and explained in greater detail in the subsequent description.

Fig. 1 shows a schematic view of an embodiment of an apparatus in a vehicle;

Fig. 2 shows a flowchart of an embodiment of a method for providing a trained policy configured to control a device; and

Fig. 3 shows a flowchart of an embodiment of a method for controlling a device.

Before advantageous embodiments of the present invention shall be described hereafter, some information on the background underlying embodiments is given in the following.

Reinforcement learning (RL) aims to learn a behaviour policy $\pi$ in a Markovian domain. At each iteration, the agent (policy) observes a state s and produces an action a. The environment then transitions based on the dynamics, e.g. laws of motion, to the next state *s'* and returns a reward r. The goal of an RL agent is to learn, through trial and error, how to maximize the cumulative discounted reward $\sum_{t=0}^{\infty} \gamma^t r_t$, where the discount factor $\gamma \in [0, 1)$ determines whether the agent is myopic or plans for a long horizon. While RL is concerned in maximizing a reward, in imitation learning (IL) the agent lacks access to a reward signal and instead has access to an expert. The interaction with the expert may take various forms. Previous work focused on constant polling, where the agent may ask the expert at any state and any time what action it would perform, or on an offline setting, where the expert provides the agent with a pre-collected dataset and there is no further interaction. The goal of an IL agent is to maximize the likelihood of the actions it takes when compared to the expert's policy. Theoretical results show that when the agent behaves 'similarly' to the expert, their performance is also 'similar'.

Previous work in imitation learning either assumed a fully interactive expert demonstrator or zero access to an expert. In the case of zero interaction, the agent is provided a pre-collected dataset. The expert starts from common states, i.e. some initial state distribution for the task, and the data collection is performed via observing the expert solving the task. A possible issue in this setting is distribution shift, where the agent may reach states it has not observed in the data. Such shift may result in failure as the agent may perform unsuitable actions in states it has never observed before. In the case of full interaction, the agent is provided direct access to the expert. As opposed to the 'zero-interaction' setting, at each state the agent may ask the expert for an annotation, e.g. the immediate one-step action. For instance, in an autonomous vehicle an action may be determined every second, and the action may be what steering angle and torque to set.

Embodiments of the present invention may bridge the gap between both schemes, i.e. zero interaction and full interaction. On the one hand, a realistic way of collecting demonstrations is provided. The expert is not expected to provide fine-grained information, but rather initialize it at a certain state and collect an entire trajectory starting from there. Converting the demonstration to trainable data is oblivious to the expert, for instance, a human driver may demonstrate by driving the vehicle, whereas behind the scenes a data collection algorithm can record the exact angle of the steering wheel and the amount of torque applied by the engine, for example.

For ease of explanation, the subsequent description will focus on the task of autonomous driving, however, it is important to emphasize that embodiments may be used in connection with any type of task. Furthermore, it will be assumed that there is access to an expert, for example a human driver. This expert can be initialized at a selected state, which may represent GPS coordinates, road conditions, traffic conditions, etc. Starting from that state, the expert may then demonstrate how it solves the task. As many tasks are complex, the demonstration is performed from start to finish.

In the subsequent description of advantageous embodiments of the present invention, similarly acting elements illustrated in the various figures are designated by the same or similar reference numerals, wherein repeated description of these elements shall be omitted.

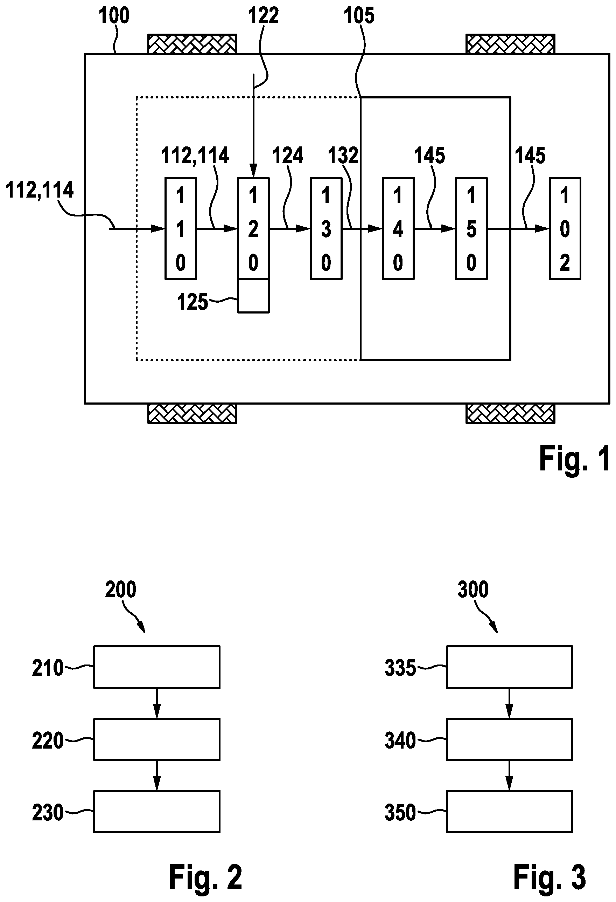

Fig. 1 shows a schematic view of an embodiment of an apparatus 105 in a vehicle 100. The apparatus 105 is configured to provide a trained policy 132 configured to control a device, here the vehicle 100, and/or to control a device, here the vehicle 100. In other words, the apparatus 105 is configured to execute and/or control the steps of a method as described in Fig. 2 and/or a method as described in Fig. 3 in corresponding units. The device, here the vehicle 100, is configured to solve a task in a working environment.

The vehicle 100 representing the device here is an off-road vehicle, for example a dozer, bulldozer, compactor, dumper, earthmover, construction vehicle, heavy machinery, heavy-duty vehicle or any other type of vehicle which has a number of assignments that include interaction with the environment, more specifically with granular material.

The vehicle 100 comprises the apparatus 105. Furthermore, the vehicle 100 comprises at least one actuator 102 for effecting or performing an action of the vehicle 100. The apparatus 105 and the actuator 102 are connected to each other for signal communication or data communication.

The apparatus 105 comprises an initialising unit 110, an executing unit 120 and a learning unit 130, which represent a providing part of the apparatus 105, and optionally also a determining unit 140 and an outputting unit 150, which represent a control part of the apparatus 105. According to the illustration in Fig. 1, the initialising unit 110, the executing unit 120, the learning 130 and the optional determining unit 140 and outputting unit 150 are realised as parts of the apparatus 105 all arranged in the vehicle 100. According to another embodiment, the initialising unit 110, the executing unit 120 and the learning unit 130, i.e. the providing part, may be realised as a part of the apparatus 105 physically arranged outside the vehicle 100.

The initialising unit 110 is configured to initialise a given policy 112 for solving the task and a dataset 114. The dataset 114 represents the task to be solved and includes initial states for solving the task. The initialising unit 110 is also configured to pass the given policy 112 and the dataset 114 on to the executing unit 120. The executing unit 120 is configured to execute an algorithm 125 for an active imitation learning agent, using the given policy 112 and the dataset 114. The active imitation learning agent algorithm 125 comprises solving the task using the given policy 112 starting from each of the initial states, or in other words computing a solution to the task using the given policy 112 starting from each of the initial states. Furthermore, the algorithm 125 comprises selecting initial states depending on a likelihood of the task being solved differently by the agent and by an expert both starting from the same initial state. Moreover, the algorithm 125 comprises appending a demonstration dataset 122 for each selected initial state to the dataset 114 to produce an extended dataset 124. Each demonstration dataset 122 represents an expert policy for solving the task starting from the selected initial state. The executing unit 120 is also configured to pass the extended dataset 124 on to the training unit 130. The training unit 130 is configured to train the given policy 112 on the extended dataset 124 so as to provide the trained policy 132.

The determining unit 140 is configured to receive or read the trained policy 132 provided by the providing part of the apparatus 105. Using the trained policy, the determining unit 140 is also configured to determine a control signal 145. Furthermore, the determining unit 140 is configured to pass the control signal 145 on to the outputting unit 150. The outputting unit 150 is configured to output the control signal 145 to the at least one actuator 102, in order to control the device, here the vehicle 100. According to an embodiment, the controlling part may be a separate part distinct from the apparatus 105.

Fig. 2 shows a flowchart of an embodiment of a method 200 for providing a trained policy configured to control a device. The method 200 for providing is a computer-implemented method. The device is configured to solve a task in a working environment. The method 200 for providing is executable by means of or in connection with the apparatus of Fig. 1 or a similar apparatus. According to one embodiment, the device is the vehicle of Fig. 1 or a similar vehicle. The method 200 for providing comprises a step 210 of initialising, a step 220 of executing and a step 230 of training.

In the step 210 of initialising, a given policy for solving the task and a dataset representing the task to be solved and including initial states for solving the task are initialised. Subsequently, in the step 220 of executing, an algorithm for an active imitation learning agent is executed using the given policy and the dataset. The algorithm comprises solving the task using the given policy starting from each of the initial states, selecting initial states depending on a likelihood of the task being solved differently by the agent and by an expert both starting from the same initial state, and appending a demonstration dataset for each selected initial state to the dataset to produce an extended dataset, wherein each demonstration dataset represents an expert policy for solving the task starting from the selected initial state. Subsequently, in the step 230 of training, the given policy is trained on the extended dataset, in order to provide the trained policy.

According to an embodiment, in the step of executing, the algorithm is executed in an iterative manner, wherein the iterative algorithm goes back and forth between solving, selecting and appending. According to the invention, in the step of executing, each demonstration dataset represents all actions taken by the expert to solve the task from the selected initial state to a final state in which the task is completed. According to then invention, the device is an off-road vehicle, and the task to be solved comprises interaction of the off-road vehicle with granular material in the working environment.

Fig. 3 shows a flowchart of an embodiment of a method 300 for controlling a device. The device is configured to solve a task in a working environment. The method 300 for generating is executable by means of or in connection with the apparatus of Fig. 1 or a similar apparatus. According to one embodiment, the device is the vehicle of Fig. 1 or a similar vehicle. The method 300 for generating comprises a step 335 of providing, a step 340 of determining and a step 350 of outputting.

In the step 335 of providing, a trained policy is provided by executing the steps of the method for providing as shown in Fig. 2 or a similar method. Subsequently, in the step 340 of determining, a control signal is determined using the trained policy. In the step 350 of outputting, the control signal is output to at least one actuator of the device, in order to control the device.

According to the invention, the device is an off-road vehicle, and the task to be solved comprises interaction of the off-road vehicle with granular material in the working environment.

With reference to the aforementioned figures, embodiments of the present invention shall be summarised in other words in the following.

The proposed approach extends the interactive setting in imitation learning (IL) to enable more realistic feedback from an expert. The approach comprises an iterative process. An exemplary top-level algorithm for Active Imitation Learning used in embodiments of the present invention may be presented as follows:

> initialize dataset $D$ (114)
> initialize policy $\pi$ (112)
> while stopping conditions not satisfied do
>
>> collect trajectories $S = \{s_0, s_1, \ldots\}$ using policy $\pi$ (112)
>> initial state $S_{selected}$ = evaluate states($S$)

> add expert demonstration (122) $D$.append($S' \sim \pi_{expert}, s_0 = s_{selected}$) (124)
> train $\pi$ (112) on $D$ (124)
>
> end while
> return $\pi$ (132)

At each iteration, the agent provides the expert with an initial state. Starting from that selected initial state, e.g. car position in the road, velocity, weather conditions, etc., the expert then provides an entire demonstration from start to finish.

This iterative scheme goes back and forth between agent evaluation, state selection and then the collection of new data via expert demonstrations given the selected initial states. In the following, each procedure shall be expanded on.

Agent Evaluation: The agent is evaluated by as follows. An initial state $s_0$ is sampled based on the initial state distribution as defined in the task. From each initial state, the agent plays out an entire trajectory and all states are recorded $\{s_0, s_1, \ldots\}$.

State Selection: The goal is to select regions which are the most informative to the agent. The "information gain" of a state is proportional to the uncertainty, e.g., how certain one is about the expert's behaviour at a given state based on the data observed so far, for instance $var_i p(a^*|s;\theta_i)$, where $\theta_i$ refers to the ith member of an ensemble of estimators. When the metric of interest is the total reward, the state selection goes per the total uncertainty to go $\sum_{t=0}^{N} var_i(a^*|s;\theta_i)$. As the uncertainty is greater than 0, this scheme will select initial states from which the agent is least certain. Similarly, when the objective is the discounted reward, it is natural to consider the discounted uncertainty to go

$$\sum_{t=0}^{N} \gamma^t var_i p(a^*|s;\theta_i).$$

Data Collection: Once the initial states have been selected, the expert will start at each of those and present the agent with a demonstration or demonstration dataset 122 of how it solves the task beginning from the selected state.

**Claims**

1. Computer-implemented method (200) for providing a trained policy (132)

   configured to control a device (100), wherein the device (100) is a physical off-road vehicle, wherein the device (100) is configured to solve a task in a working environment, by controlling the device (100) using at least one actuator (102) for performing actions of the device (100), wherein the task to be solved comprises interaction of the off-road vehicle with granular material in the working environment, wherein the task to be solved comprises trajectory planning from an initial state to a final state from demonstration datasets (122),

wherein each demonstration dataset (122) represents an expert policy including all actions taken by the expert for solving the task starting from an initial state to a final state in which the task is completed,

wherein the method (200) comprises the steps of:

initialising (210) a given policy (112) including a series of actions for solving the task and a dataset (114) representing the task to be solved and including initial states for solving the task;

executing (220) an algorithm (125) for an active imitation learning agent using the given policy (112) and the dataset (114), wherein the algorithm (125) comprises solving the task using the given policy (112) starting from each of the initial states, by selecting initial states from which the agent is least certain depending on a likelihood of the task being solved differently by the agent and by an expert both starting from the same initial state, wherein the likelihood is determined depending on a level of uncertainty of the agent with respect to solving the task in the same way as the expert, and appending a demonstration dataset (122) for each selected initial state to the dataset (114) to produce an extended dataset (124), and

training (230) the given policy (112) on the extended dataset (124), in order to provide the trained policy (132).

2. Method (200) according to claim 1, wherein in the step (220) of

executing the algorithm (125) is executed in an iterative manner, wherein the iterative algorithm (125) goes back and forth between solving, selecting and appending.

3. Method (300) for controlling a device (100), wherein the device (100) is a physical off-road vehicle, wherein the device (100) is configured to solve a task in a working environment, by controling the device (100) using at least one actuator (102) for performing actions of the device (100), wherein the task to be solved comprises interaction of the off-road vehicle with granular material in the working environment, wherein the method (300) comprises the steps of:

providing (335) a trained policy (132) by performing method (200) according to one of the preceding claims;

determining (340) a control signal (145) using the trained policy (132);
and
outputting (350) the control signal (145) to the at least one actuator (102) of the device (100), in order to control the device (100).

4. Apparatus (105), configured to execute and/or control the steps of a method (200; 300) according to one of the preceding claims in corresponding units (110, 120, 130; 140, 150).

5. Off-road vehicle (100) comprising an apparatus (105) according to claim 4.

6. Computer program, configured to execute and/or control the steps of a method (200; 300) according to one of claims 1-3

7. Machine-readable storage medium, on which the computer program according to claim 6 is stored.

**Patentansprüche**

1. Computer-implementiertes Verfahren (200) zum Bereitstellen einer trainierten Richtlinie (132), die zum Steuern einer Vorrichtung (100) konfiguriert ist, wobei die Vorrichtung (100) ein physisches Geländefahrzeug ist, wobei die Vorrichtung (100) zum Lösen einer Aufgabe in einer Arbeitsumgebung konfiguriert ist, indem die Vorrichtung (100) unter Verwendung mindestens eines Aktuators (102) zum Durchführen von Aktionen der Vorrichtung (100) gesteuert wird, wobei die zu lösende Aufgabe eine Interaktion des Geländefahrzeugs mit körnigem Material in der Arbeitsumgebung aufweist, wobei die zu lösende Aufgabe eine Trajektorienplanung von einem Anfangszustand zu einem Endzustand aus Demonstrationsdatensätzen (122) aufweist, wobei jeder Demonstrationsdatensatz (122) eine Expertenrichtlinie darstellt, die alle vom Experten zur Lösung der Aufgabe durchgeführten Aktionen enthält, beginnend von einem Anfangszustand bis zu einem Endzustand, in dem die Aufgabe abgeschlossen ist, wobei das Verfahren (200) die folgenden Schritte aufweist:

Initialisieren (210) einer gegebenen Richtlinie (112), die eine Reihe von Aktionen zum Lösen der Aufgabe und einen Datensatz (114) aufweist, der die zu lösende Aufgabe darstellt und Anfangszustände zum Lösen der Aufgabe enthält;
Ausführen (220) eines Algorithmus (125) für einen aktiven Imitationslernagenten unter Verwendung der gegebenen Richtlinie (112) und des Datensatzes (114),

wobei der Algorithmus (125) das Lösen der Aufgabe unter Verwendung der gegebenen Richtlinie (112) beginnend mit jedem der Anfangszustände aufweist, indem Anfangszustände ausgewählt werden, bei denen der Agent am wenigsten sicher ist, abhängig von einer Wahrscheinlichkeit, dass die Aufgabe vom Agenten und von einem Experten, die beide vom gleichen Anfangszustand ausgehen, unterschiedlich gelöst wird, wobei die Wahrscheinlichkeit abhängig von einem Grad der Unsicherheit des Agenten in Bezug auf das Lösen der Aufgabe auf die gleiche Weise wie der Experte bestimmt wird, und das Anhängen eines Demonstrationsdatensatzes (122) für jeden ausgewählten Anfangszustand an den Datensatz (114), um einen erweiterten Datensatz (124) zu erzeugen, und

Trainieren (230) der gegebenen Richtlinie (112) anhand des erweiterten Datensatzes (124), um die trainierte Richtlinie (132) bereitzustellen.

2. Verfahren (200) nach Anspruch 1, wobei in dem Schritt (220) des Ausführens des Algorithmus (125) dieser iterativ ausgeführt wird, wobei der iterative Algorithmus (125) zwischen Lösen, Auswählen und Anhängen hin- und herwechselt.

3. Verfahren (300) zum Steuern einer Vorrichtung (100), wobei die Vorrichtung (100) ein physisches Geländefahrzeug ist, wobei die Vorrichtung (100) zum Lösen einer Aufgabe in einer Arbeitsumgebung konfiguriert ist, indem die Vorrichtung (100) unter Verwendung mindestens eines Aktuators (102) zum Durchführen von Aktionen der Vorrichtung (100) gesteuert wird, wobei die zu lösende Aufgabe eine Interaktion des Geländefahrzeugs mit körnigem Material in der Arbeitsumgebung aufweist, wobei das Verfahren (300) die folgenden Schritte aufweist:

Bereitstellen (335) einer trainierten Richtlinie (132) durch Ausführen des Verfahrens (200) nach einem der vorhergehenden Ansprüche; Bestimmen (340) eines Steuersignals (145) unter Verwendung der trainierten Richtlinie (132); und

Ausgeben (350) des Steuersignals (145) an den mindestens einen Aktuator (102) der Vorrichtung (100), um die Vorrichtung (100) zu steuern.

4. Gerät (105), das so konfiguriert ist, dass es die Schritte eines Verfahrens (200; 300) gemäß einem der vorhergehenden Ansprüche in entsprechenden Einheiten (110, 120, 130; 140, 150) ausführt und/oder steuert.

5. Geländefahrzeug (100), das ein Gerät (105) nach Anspruch 4 aufweist.

6. Computerprogramm, das so konfiguriert ist, dass es die Schritte eines Verfahrens (200; 300) nach einem der Ansprüche 1 bis 3 ausführt und/oder steuert.

7. Maschinenlesbares Speichermedium, auf dem das Computerprogramm nach Anspruch 6 gespeichert ist.

**Revendications**

1. Procédé (200) mis en œuvre par ordinateur pour fournir une politique formée (132) configurée pour commander un dispositif (100), le dispositif (100) étant un véhicule physique tout terrain, le dispositif (100) étant configuré pour résoudre une tâche dans un environnement de travail, en commandant le dispositif (100) à l'aide d'au moins un actionneur (102) pour réaliser des actions du dispositif (100), la tâche à résoudre comprenant l'interaction du véhicule tout terrain avec un matériau granulaire dans l'environnement de travail, la tâche à résoudre comprenant une planification de trajectoire d'un état initial à un état final à partir d'ensembles de données de démonstration (122), chaque ensemble de données de démonstration (122) représentant une politique d'expert comprenant toutes les actions prises par l'expert pour résoudre la tâche commençant à un état initial et jusqu'à un état final où la tâche est achevée, le procédé (200) comprenant les étapes suivantes :

initialiser (210) une politique donnée (112) incluant une série d'actions pour résoudre la tâche et un ensemble de données (114) représentant la tâche à résoudre et comprenant des états initiaux pour résoudre la tâche ; exécuter (220) un algorithme (125) pour un agent d'apprentissage par imitation active à l'aide de la politique donnée (112) et de l'ensemble de données (114), où l'algorithme (125) comprend la résolution de la tâche à l'aide de la politique donnée (112) en partant de chacun des états initiaux, en sélectionnant des états initiaux à partir desquels l'agent est le moins certain relativement à une probabilité que la tâche soit résolue différemment par l'agent et par un expert partant tous les deux du même état initial, où la probabilité est déterminée en fonction d'un niveau d'incertitude de l'agent en ce qui concerne la résolution de la tâche de la même façon que l'expert, et l'ajout d'un ensemble de données de démonstration (122) pour chaque état initial sélectionné à l'ensemble de données (114) pour produire un ensemble de données étendu (124), et

former (230) la politique donnée (112) sur l'ensemble de données étendu (124), afin de fournir la politique formée (132).

2. Procédé (200) selon la revendication 1, dans lequel, à l'étape (220) d'exécution, l'algorithme (125) est exécuté de manière itérative, l'algorithme itératif (125) faisant des allers et retours entre la résolution, la sélection et l'ajout.

3. Procédé (300) de commande d'un dispositif (100), le dispositif (100) étant un véhicule physique tout-terrain, le dispositif (100) étant configuré pour résoudre une tâche dans un environnement de travail, en commandant le dispositif (100) à l'aide d'au moins un actionneur (102) pour effectuer des actions du dispositif (100), la tâche à résoudre comprenant une interaction du véhicule tout-terrain avec un matériau granulaire dans l'environnement de travail, le procédé (300) comprenant les étapes suivantes :

fournir (335) une politique formée (132) en mettant en œuvre le procédé (200) selon l'une des revendications précédentes ;
déterminer (340) un signal de commande (145) en utilisant la politique formée (132) ; et
délivrer en sortie (350) le signal de commande (145) vers l'au moins un actionneur (102) du dispositif (100), afin de commander le dispositif (100).

4. Appareil (105), configuré pour exécuter et/ou commander les étapes d'un procédé (200 ; 300) selon l'une des revendications précédentes dans des unités correspondantes (110, 120, 130 ; 140, 150).

5. Véhicule tout-terrain (100) comprenant un appareil (105) selon la revendication 4.

6. Programme d'ordinateur, configuré pour exécuter et/ou commander les étapes d'un procédé (200 ; 300) selon l'une des revendications 1 à 3.

7. Support de stockage lisible par machine sur lequel est stocké le programme d'ordinateur selon la revendication 6.

100    122    105

112,114    124    132    145    145

112,114

```
110    120    130    140    150    102
```

125

**Fig. 1**

200    300

210    220    230

335    340    350

**Fig. 2**    **Fig. 3**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019126472 A1

**Non-patent literature cited in the description**

- **ROSS CHANA et al.** *AGPNet - Autonomous Grading Policy Network*, 20 December 2021, 1-7

- Agile Off-Road Autonomous Driving Using End-to-End Deep Imitation Learning. **YUNPENG PAN et al.** ARXIV.ORG. CORNELL UNIVERSITY LIBRARY, 21 September 2017